# DEMANDE DE BREVET EUROPEEN

(11) **EP 2 086 166 A1**
(43) Date de publication de la demande: **05.08.2009**
(21) Numéro de dépôt: 09150716.0
(22) Date de dépôt: 16.01.2009
(51) Int. Cl.: H04L 12/18

(54) **Procédé et système de controle par ècho de la fourniture de contenus MBS d'un réseau de communication**

(30) Priorité: 18.01.2008 FR 0850311
(71) Demandeur: Alcatel Lucent, 75008 Paris (FR)
(72) Inventeur: Balageas, Carine, 91620, NOZAY (FR); De Juan Huarte, Federico, 78141, VELISY (FR)
(74) Mandataire: Ameline, Jean-Paul B.C.

(57) **Abrégé**

Un système de contrôle de la fourniture de contenus MBS à diffuser dans une zone MBS (ZM) d'un réseau de communication, comprend i) des stations de base (SB1-SBN) faisant partie de cette zone MBS (ZM), ii) des terminaux de communication (MS) propres à se connecter aux stations de base, et iii) un serveur de service MBS (SM) associé à la zone MBS (ZM) et chargé de transmettre aux terminaux (MS) des messages d'interrogation demandant si au moins l'un d'entre eux est intéressé par un groupe de contenu(s) désigné par un identifiant de groupe. Chaque station de base (SB1-SBN) est en outre chargée, lorsqu'elle reçoit d'un terminal (MS) un premier message de réponse signalant son intérêt pour un groupe désigné dans un message d'interrogation précédemment reçu, de n'adresser que ce premier message de réponse au serveur de service MBS (SM), mais pas les suivants issus d'autres terminaux (MS) et relatifs au même groupe, et éventuellement d'adresser ce premier message de réponse aux terminaux (MS) pour leur signaler qu'ils ne doivent plus répondre au message d'interrogation relatif au groupe qu'il désigne. Par ailleurs, le serveur de service MBS (SM) est chargé, lorsqu'il reçoit un premier message de réponse désignant un groupe, de signaler à certaines au moins des stations de base qu'elles ne doivent plus lui adresser de message de réponse désignant ce groupe.

## Description

L'invention concerne les réseaux de communication filaires et non filaires dans lesquels la transmission de messages sur la voie montante se fait en mode point-à-point (ou « unicast ») et dans lesquels sont définies des zones géographiques de type zone MBS (« Multicast and Broadcast Service ») pour la diffusion de données (ou contenus) vers des terminaux de communication grâce à un service MBS, et plus précisément le contrôle de la fourniture, par diffusion, de contenus MBS à des terminaux de communication qui sont connectés à de tels réseaux.

Les réseaux de communication précités comprennent donc, notamment, les réseaux filaires de type xDSL et les réseaux sans fil, éventuellement satellitaires, comme par exemple ceux de type cellulaire (ou mobile) (tels que les réseaux de type GSM, GPRS/EDGE, UMTS ou CDMA (2000)), ou de type WLAN (« Wireless Local Area Network - réseau local sans fil, tels que les réseaux WiMAX (regroupement des standards IEEE 802.16 et HiperMan, notamment), Wi-Fi (standard IEEE 802.11g), ETSI HiperLAN/2 ou conformes au standard 802.11a). Mais, ils ne comprennent pas les réseaux de type Ethernet (standard IEEE 802.3).

On entend ici par « voie montante » (ou « uplink ») la voie de transmission allant des terminaux de communication vers le réseau d'accès d'un réseau de communication, et par « voie descendante » (ou « downlink ») la voie de transmission allant du réseau d'accès d'un réseau de communication vers des terminaux de communication.

Par ailleurs, on entend ici par « terminal de communication » tout équipement de communication fixe ou mobile (ou portable ou encore cellulaire) capable d'échanger des contenus avec un autre terminal de communication ou un équipement de réseau, via un réseau de communication du type précitè. Par conséquent, il pourra par exemple s'agir d'un téléphone fixe ou mobile (ou cellulaire), d'un ordinateur fixe ou portable, d'un assistant personnel numérique (ou PDA), ou d'un récepteur de contenus multimédia (par exemple un décodeur, une passerelle résidentielle (ou « residential gateway ») ou une STB (« Set-Top Box »)), dès lors qu'il est équipé de moyens de communication.

Comme le sait l'homme de l'art, certains réseaux des types précités, et notamment ceux de type WiMAX, permettent d'offrir aux terminaux (de communication) qui sont connectés à leurs réseaux d'accès un service de diffusion de données (ou contenus) appelé MBS. Ce service MBS peut être mis en oeuvre grâce à un mode d'accès par stations de base (ou analogues, comme par exemple des multiplexeurs de type DSLAM dans le cas d'un réseau xDSL) multiples (appelé en anglais « Multi-BS MBS access mode ») et un regroupement de stations de base (ou analogues) au sein de zones géographiques de type zones MBS (ou « MBS zones »). Plus précisément, dans le mode précité un même flux de service MBS peut être transmis vers des terminaux par un ensemble de stations de base qui utilisent une même paire d'informations CID (« Connection Identifier ») et SA (« Security Association ») et qui constituent ensemble une zone MBS associée à un serveur de service MBS et à un identifiant de zone (« MBS_Zone_id ») qu'elles diffusent.

La combinaison de ce mode d'accès et de cette définition de zones MBS offre plusieurs avantages, En effet, lorsque des terminaux sont à l'intérieur d'une zone MBS, ils n'ont pas besoin de s'enregistrer auprès de chacune des stations de base de cette zone MBS. Il suffit qu'ils s'enregistrent lorsqu'ils accèdent au réseau par l'une des stations de base de ses zones MBS afin d'obtenir les paires d'informations <CID, SA> de cette zone MBS qui leur permettent ensuite de recevoir des flux de service définissant certains au moins des contenus MBS qui sont diffusés localement par toutes les stations de base de cette zone MBS, Un terminal peut alors demeurer en mode d'attente (ou « idle ») tout en écoutant le trafic sur la voie descendante pour recevoir les contenus diffusés, permettant ainsi d'économiser de la puissance.

Dans un tel environnement, le serveur de service MBS d'une zone MBS (qui constitue un routeur local au sens du protocole d'abonnement aux groupes multicast IGMP) adresse, généralement périodiquement, aux terminaux, qui sont connectés aux stations de base de cette zone MBS, via ces dernières, des messages d'interrogation (ou « Query messages ») destinés à leur demander s'ils sont intéressés par un groupe de contenu(s) (parfois appelé « groupe multicast ») désigné par un identifiant de groupe (qui est l'adresse IP multicast du groupe). Si un terminal est intéressé par le groupe qui est désigné dans un message d'interrogation qu'il vient de recevoir, il transmet au serveur de service MBS de sa zone MBS, via la station de base à laquelle il est connecté, un message de réponse (ou « Report message ») A réception d'un tel message de réponse, le serveur de service MBS sait qu'il doit continuer momentanément à autoriser la diffusion du (ou des) contenu(s) du groupe qu'il désigne.

On comprendra qu'il suffit que le serveur de service MBS reçoive un seul message de réponse désignant un groupe, consécutivement à la transmission d'un message d'interrogation désignant ce même groupe, pour décider de continuer momentanément à autoriser la diffusion du (ou des) contenu(s) de ce groupe. Or, comme il n'existe pas de mécanisme (ou procédé) permettant de signaler aux terminaux et à leurs stations de base que la décision de poursuivre la diffusion du (ou des) contenu(s) d'un groupe a déjà été prise par le serveur de service MBS agissant en tant que routeur local IGMP, de nombreux terminaux continuent à transmettre à leurs stations de base respectives leurs messages de réponse relatifs a ce même groupe et leurs stations de base font remonter tous ces messages de réponse vers le serveur de service MBS, Il en résulte qu'une partie non négligeable des ressources de transmission du réseau d'accès est inutilement consommée par les nombreux messages de réponse redondants. En effet, dans le cas où la transmission de message sur la liaison montante se fait en mode point-à-point, les terminaux n'entendent pas si un terminal a déjà envoyé un message de reponse (dans le fonctionnement classique d'IGMP pour Ethernet, le message de réponse d'un terminal est diffusé à tous les terminaux et si un terminal reçoit le message de réponse de la part d'un autre terminal, il n'envoie pas le sien), et donc les terminaux envoient eux mêmes leurs messages de réponse (ou Report messages).

L'invention a donc pour but d'améliorer au moins partiellement la situation.

Elle propose à cet effet un procédé, dédié au contrôle de la fourniture de contenus MBS devant être diffusés dans une zone MBS d'un réseau de communication, et consistant :
- à transmettre d'un serveur de service MBS de cette zone MBS vers des terminaux (de communication) connectés à des stations de base qui font partie de cette zone MBS, un message d'interrogation demandant si au moins l'un desdits terminaux est intéressé par un groupe de contenu(s) désigné par un identifiant de groupe (par exemple une adresse IP multicast du groupe), et
- lorsque l'une de ces stations de base reçoit d'un terminal un premier message de réponse signalant son intérêt pour ce groupe, à n'adresser que ce premier message de réponse au serveur de service MBS, mais pas les messages de réponse suivants issus d'autres terminaux et relatifs au même groupe, et à signaler à certaines au moins des stations de base qu'elles ne doivent plus adresser au serveur de service MBS de message de réponse désignant ce même groupe et/ou à certains au moins des terminaux qu'ils ne doivent plus adresser aux stations de base auxquelles ils sont connectés de message de réponse désignant ce même groupe.

Le procédé selon l'invention peut comporter d'aubes caractéristiques qui peuvent être pnses séparément ou en combinaison, et notamment :
- lorsque rune des stations de base reçoit d'un terminal un premier message de réponse signalant son intérêt pour le groupe désigné, elle peut n adresser que ce premier message de réponse au serveur de service MBS, et elle peut adresser ce même message de réponse aux terminaux qui sont connectés à elle pour leur signaler qu'ils ne doivent plus répondre au message d'interrogation relatif au groupe qu'il désigne ;
- lorsque le serveur de service MBS reçoit de l'une des stations de base un premier message de réponse désignant le groupe objet du message d interrogation, il peut adresser ce message de réponse aux stations de base pour leur signaler qu elles ne doivent plus lui adresser de message de réponse désignant ce groupe ;
   ➢ lorsque les stations de base reçoivent du serveur de service MBS le message de réponse désignant le groupe, elles peuvent adresser ce message de réponse aux terminaux qui sont respectivement connectés à elles afin de leur signaler qu'ils ne doivent plus répondre au message d'interrogation désignant ce groupe.

L'invention propose également un système, dédié au contrôle de la fourniture de contenus MBS à diffuser dans une zone MBS d'un réseau de communication, et comprenant :
- des stations de base faisant partie de cette zone MBS,
- des terminaux de communication propres à se connecter à ces stations de base, et
- un serveur de service MBS associé à la zone MBS et agencé pour transmettre aux terminaux de communication des messages d'interrogation demandant si au moins l'un d entre eux est intéressé par un groupe de contenu(s) désigné par un identifiant de groupe,
- chaque station de base étant en outre agencée, lorsqu'elle reçoit d'un terminal un premier message de réponse signalant son intérêt pour un groupe désigné dans un message d'interrogation précédemment reçu, pour n'adresser que ce premier message de réponse au serveur de service MBS, mais pas les messages de réponse suivants issus d'autres terminaux et relatifs au même groupe, et
- le serveur de service MBS étant en outre agencé, lorsqu'il reçoit un premier message de réponse désignant un groupe, pour signaler aux stations de base qu'elles ne doivent plus lui adresser de message de réponse désignant ce même groupe.

Le système selon l'invention peut comporter d'autres caractéristiques qui peuvent être prises séparément ou en combinaison, et notamment :
- chaque station do base peut être agencée, lorsqu'elle reçoit d'un terminal un premier message de réponse signalant son intérêt pour un groupe désigné dans un message d'interrogation précédemment reçu, pour signaler aux terminaux qui sont connectés à elle qu ils ne doivent plus répondre au message d'interrogation relatif à ce groupe désigné ;
   ➢ chaque station de base peut être agencée, lorsqu'elle reçoit d'un terminal un premier message de réponse signalant son intérêt pour un groupe désigné dans un message d'interrogation précédemment reçu, pour n adresser que ce premier message de réponse au serveur de service MBS. et pour adresser ce premier message de réponse aux terminaux qui sont connectés à elle pour leur signaler qu'ils ne doivent plus répondre au message d'interrogation relatif au groupe qu'il désigne ;
- le serveur de service MBS peut être agencé, lorsqu'il reçoit de l'une des stations de base un premier message de réponse désignant le groupe objet du message d'interrogation, pour adresser ce message de réponse aux stations de base pour lueur signaler qu'elles ne doivent plus lui adresser de message de réponse désignant ce même groupe ;
   ➢ chaque station de base peut être agencée, lorsqu'elle reçoit du serveur de service MBS un message de réponse désignant un groupe, pour adresser ce message de réponse aux terminaux qui sont connectés à elle afin de leur signaler qu'ils ne doivent plus répondre au message d'interrogation désignant ce même groupe.

L'invention propose également, une station de base (ou analogue) et un serveur de service MBS destinés à faire partie d un système de contrôle du type de celui présenté ci-avant.

L invention est particulièrement bien adaptée, bien que de façon non exclusive, aux réseaux locaux de communication sans fil ou WLAN, et en particulier (bien que non limitativement) à ceux de type WiMAX.

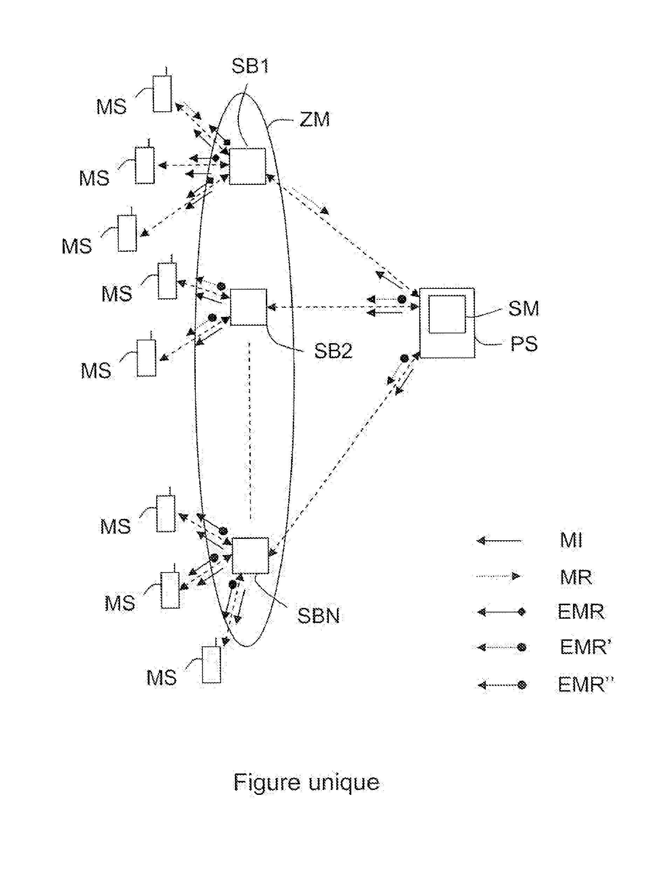

D'autres caractéristiques et avantages de invention apparaîtront à l'examen de la description détaillée ci-après, et du dessin annexé, sur lequel l'unique figure (avec sa légende) illustre de façon très schématique un exemple d'étapes, d'un procédé selon l'invention de contrôle de la fourniture de contenus MBS à des terminaux mobiles connectés à une zone MBS, mises en oeuvre au moyen d'un exemple de système selon l'invention

Le dessin annexé pourra non seulement servir à compléter l'invention, mais aussi contribuer à sa définition, le cas échéant.

L'invention a pour objet de permettre une réduction au moins partielle du nombre de messages qui sont échangés dans une zone MBS d'un reseau de communication dans le but de déterminer si des terminaux de communication sont intéressés par des contenus MBS de groupes de contenu(s).

Dans ce qui suit, on considére à titre d'exemple non limitatif que le réseau local (de communication) sans fil est de type WiMAX. Mais l'invention n'est pas imitée à ce type de réseau. Elle concerne en effet tous les réseaux de communication filaires et non filaires dans lesquels la transmission de messages sur la voie montante (ou uplink) se fait en mode posnt-à-point (ou unicast) tandis que la transmission de messages sur la voie descendante (ou downlink) se fait en mode point-à-multipoints (ou broadcast), et dans lesquels sont définies des zones géographiques de type zone MBS Par conséquent sont également et notamment concernés les réseaux filaires de type xDSL et les réseaux sans fil, éventuellement satellitaires, comme par exemple ceux de type cellulaire (ou mobile), tels que les réseaux de type GSM, GPRS/EDGE, UMTS ou CDMA (2000), ou ceux de type WLAN, tels que les réseaux Wi-Fi (standard IEEE 80211g), ETSI HiperLAN/2 ou conformes au standard 802.11a.

Par ailleurs, on considère dans ce qui suit, à titre d'exemple non limitatif, que les terminaux de communication (MS) sont des téléphones mobiles (ou cellulaires). Mais, l'invention n'est pas limitée à ce type de terminal de communication, Elle concerne en effet tout équipement de communication fixe ou mobile (ou portable ou encore cellulaire) capable d'échanger des contenus avec un autre terminal de communication ou un équipement de réseau, via un réseau de communication du type précité. Par consequent, il pourra également et par exemple s'agir d'un téléphone fixe, d'un ordinateur fixe ou portable, d'un assistant personnel numérique (ou PDA), ou d'un récepteur de contenus multimédia (par exemple un décodeur, une passerelle résidentielle (ou « residential gateway ») ou une STB (« Set-Top Box »)), dès fors qu il est équipe de moyens de communication.

Comme cela est schématiquement et fonctionnellement illustré sur l'unique figure, un réseau local sans fil (ici de type WiMAX), implémentant un service MBS, comprend au moins un rèseau d'accès, généralement appelé ASN (« Access Service Network »), et auquel peuvent se connecter des terminaux MS. Dans l'exemple non limitatif illustré, seul un réseau d accès de type ASN a été représenté. Mais, le réseau local sans fil pourrait comprendre au moins deux réseaux d'accès.

Il est rappelé qu'un réseau d'accès de type ASN comprend notamment au moins une station de base SB, généralement appelée BS (« Base Station ») et équivalent d'un multiplexeur DSLAM dans un réseau xDSL, et par laquelle les terminaux MS peuvent se connecter au réseau local sans fil, ainsi qu'une passerelle de service PS, généralement appelée ASN-GW (« ASN-GateWay »).

Il est également rappelé que l'on peut définir au moins une zone MBS ZM dans un réseau local sans fil. Chaque zone MBS ZM regroupe au moins une station de base SBi (i = 1 à N, avec N ≥1) qui appartient à au moins un réseau d'accès. Dans l'exemple non limitatif illustré, la zone MBS ZM regroupe N stations de base SB1 à SBN appartenant à l'unique réseau d accès.

Chaque zone MBS ZM est associée à un identifiant de zone (« MBS_Zone_id ») et contrôlée par un serveur de service MBS SM (ou « MBS Server »). Les stations de base SBi d'une zone MBS ZM sont notamment chargées de diffuser vers les terminaux MS l'identifiant de zone (MBS_Zone_id) de leur zone, MBS ZM.

Un serveur de service MBS SM est un élément de réseau par lequel transitent toutes les données de trafic (notamment les contenus à diffuser) qui sont destinées à la zone MBS ZM qui il contrôle, et qui est couplé aux stations de base SBi qui font partie de la zone MBS ZM qu'il contrôle.

Dans l'exemple non limitatif lustré, le serveur de service MBS SM fait partie de la passerelle de service PS du réseau d'accès. Mais, cela n'est pas obligatoire. Le serveur de service MBS SM d'une zone MBS ZM peut en effet être un élément de réseau qui constitue ou fait partie d un équipement ou élément de réseau qui n'est pas forcément une passerelle de service PS.

Le serveur de service MBS SM est notamment charge d'attribuer à toutes les stations de base SBi de la zone MBS ZM qu'il contrôle des paires d'informations CIDj (« Connection identifier ») et SAj (« Security Association ») (<CIDi,SAi>) associées respectivement aux flux de service (j) des différents contenus MBS (j) à diffuser En effet, lorsque le service MBS est mis en oeuvre gràce à un mode d'accès par stations de base multiples (ou « Multi-BS access mode »), un même flux de service MBS peut être transmis (diffusé) vers les terminaux MS par les stations de base SBi d'une zone MBS qui utilisent la même paire d'informations <CIDj,SAj>.

Le serveur de service MBS SM constitue également l'un des éléments du système qui est chargé de contrôler la fourniture des contenus MBS devant être diffusés dans sa zone MBS ZM. Les autres éléments de ce système sont les stations de base SBi.

L'invention propose de mettre en oeuvre, au sein du réseau présenté ci-avant (ici un réseau local sans fil), un procédé destiné à contrôler la fourniture des contenus MBS à diffuser dans une zone MBS ZM.

Ce procédé consiste en deux étapes principales et est initié par le serveur de service MBS SM.

La première étape principale consiste à transmettre du serveur de service MBS SM de la zone MBS ZM vers les terminaux MS qui sont connectés aux stations de base SBi de cette zone MBS ZM, via ces dernières (SBi), des messages d'interrogation MI (voir la légende de l'unique figure) destinés chacun à demander si au moins l'un des terminaux MS est intéresse par un groupe de contenu(s), ou groupe multicast, qui est désigné par un identifiant de groupe.

Le protocole qui est utilisé, pour transmettre les messages d'interrogation MI est par exemple IGMP (protocole d'adhésion à un groupe multicast). Dans ce cas, chaque message d'interrogation MI est par exemple de type « Query message », bien connu de l'homme de l'art.

En présence d'un tel protocole IGMP, le serveur de service MBS SM constitue un routeur local IGMP, les stations de base SBi constituent des équipements intermédiaires de type « proxy » IGMP, et les terminaux MS constituent des hôtes (ou « hosts ») IGMP.

La transmission des messages d'interrogation MI relatifs à un même groupe multicast est par exemple périodique, typiquement toutes les 125 secondes. On comprendra qu'après avoir transmis un message d'interrogation MI désignant un groupe multicast GMk le serveur de service MBS SM transmet un autre message d'interrogation MI désignant un autre groupe multicast GMk', et ainsi de suite jusqu'à ce qu'il ait désigné tous les groupes multicast qui sont contenus dans la liste qu'il stocke dans une mémoire.

Un message d'Interrogation MI, désignant un groupe multicast (par exemple GM1) et généré par le serveur de service MBS SM, est donc adressé à chaque station de base SBi de la zone MBS ZM, qui se charge alors de le transmettre (ici par voie d'ondes) aux terminaux MS qui sont connectés à elle.

A réception d'un tel message d'interrogation MI, un terminal MS est libre d'y répondre ou de ne pas y répondre, selon qu'il est intéressé ou non intéressé par le(s) contenu(s) du groupe multicast (ici GM 1) qu il désigne.

La seconde étape principale du procédé selon l'invention débute lorsque l'une des stations de base SBi, par exemple SB1, reçoit de l'un des terminaux MS qui sont connectés à elle le tout premier message de réponse MR (voir la légende de l'unique figure) qui signale son Intérêt pour un groupe multicast (ici GM1) désigné dans le tout dernier message d'interrogation MI qu'elle lui avait transmis.

La station de base SB1 n'est alors autorisée qu'à adresser ce premier message de réponse MR au serveur de service MBS SM, mais pas les messages de réponse suivants qui lui sont éventuellement et postérieurement transmis par d'autres terminaux MS et qui sont relatifs au même groupe (ici GM1)

On notera que le protocole qui est utilisé pour transmettre les messages de réponse MR sur la voie montante (uplink), tant par les terminaux MS que par les stations de base SBi est le même que celui qui est utilisé pour la transmission des messages d'interrogation MI sur la voie descendante (downlink). Il s'agit donc, par exemple, d'IGMP. Dans ce cas, chaque message de réponse MR est par exemple de type « Report message », bien connu de l'homme de l'art.

On notera que la station de base SBi reçoit d'un terminal MS un message de rèponse IGMP MR encapsulé dans un message IP (« Internet Protocol »), et donc comportant un champ d'entête désignant sa source (adresse du terminal MS source) et un champ d'entête désignant sa destination (adresse du groupe multicast GMk concerné), Par conséquent, lorsqu'une station de base SBi veut transférer un message de reponse IGMP MR vers le serveur de service MBS SM, elle n'a qu'à remplacer le champ d'entête de source (adresse MS) qui lui est adjoint par un autre champ d'entête de source qui la désigne (adresse SBi), Si le transfert se fait dans un tunnel de type GRE unicast, le message IP modifié (qui encapsule le message de réponse MR) est alors également encapsulé par adjonction d un champ d'entête désignant sa destination finale (adresse du serveur de service MBS SM).

Une fois que la station de base SB1 a adressé un premier message de réponse MR désignant un groupe multicast (ici GM1) au serveur de service MBS SM, on signale alors à certaines au moins des stations de base SBi qu'elles ne doivent plus adresser à ce serveur de service MBS SM de message de réponse désignant ce même groupe multicast (ici GM1) et/ou on signale à certains au moins des terminaux MS qu'ils ne doivent plus adresser à leurs stations de base SBi de message de réponse désignant ce même groupe multicast (ici GM1),

Pour effectuer le signalement aux terminaux MS qui sont connectés à elle, la station de base SB1 qui a reçu d'un terminal MS un premier message de réponse MR désignant un groupe multicast (ici GM1), peut par exemple adresser en mode diffusion ce même (premier) message de réponse MR aux dits terminaux MS au sein d'un message dit « d'écho » EMR (voir la légende de l'unique figure) Ainsi, lorsque les terminaux MS reçoivent ce message d'écho EMR diffusé contenant le (premier) message de réponse MR, ils en déduisent qu'il a été précedemment transmis par un autre terminal MS et donc qu ils ne doivent plus répondre au dernier message d interrogation MI relatif au groupe multicast (ici GM1) qu il désigne et qu'ils ont précédemment reçu. On comprendra bien entendu qu'ils peuvent répondre à tout autre message d'interrogation reçu ou qu ils vont bientôt recevoir et désignant n'importe quel autre groupe multicast GMK (ici k ≠1), tant que cela ne leur est pas interdit.

Par ailleurs, on comprendra que l'interdiction de répondre à un message d'interrogation MI désignant un groupe multicast GMk ne dure que jusqu'à la réception du prochain message d'interrogation MI désignant ce même groupe multicast GMk.

On notera que la station de nase SBi n'a pas besoin de modifier le message IP qui encapsule le message de réponse IGMP MR qu'elle veut transférer par diffusion vers les terminaux MS qui sont connectés a elle. C'est la raison pour laquelle on utilise ici la notion de message d'écho EMR.

Pour effectuer le signalement aux stations de base SBi, le serveur de service MBS SM qui a reçu de l'une des stations de base SBi (ici SB1) un premier message de réponse MR désignant un groupe multicast (ici GM1), objet du dernier message d'interrogation MI désignant ce même groupe multicast (ici GM1), adresse ce message de réponse MR aux stations de base SBi (éventuellement seulement celles différentes de SB1) au sein d'un autre message d'écho EMR' (voir la légende de l'unique figure), Ainsi, lorsque les stations de base SBi reçoivent cet autre message d'écho EMR' contenant le (premier) message de réponse MR, elles en déduisent qu'il a été précédemment transmis par un terminal MS et donc qu'elles ne doivent plus lui adresser (ou faire remonter) de message de réponse désignant le groupe multicast (ici GM1) qu'il désigne.

On comprendra que l'interdiction de faire remonter vers le serveur de service MBS SM des messages de réponse désignant un groupe multicast GMk ne dure que jusqu'à la réception par les stations de base SBi du prochain message d'interrogation MI désignant ce même groupe multicast GMk et destiné aux terminaux MS.

On notera que pour transférer un message de réponse IGMP MR (reçu encapsulé dans un message IP ainsi qu'éventuellement dans un tunnel GRE unicast) vers les ou des stations de base SBi, le serveur de service MBS SM peut par exemple utiliser des tunnels GRE unicast différents pour chacune des stations de base SBi Dans ce cas, le serveur de service MBS SM remplace le champ d'entêté de destination finale (sa propre adresse), qui a été, adjoint au message de réponse IGMP MR, par un autre champ d'entête de destination qui désigne des stations de base SBi (adresse SBi), et il recommence cette opération pour chacune des stations de base SBi qu'il veut alerter Le message IP qui encapsule le message de réponse MR n'étant pas modifié, on peut donc également utiliser ici la notion de message d'écho EMR'.

Par ailleurs, lorsque les stations de base SBi reçoivent du serveur de service MBS SM un message d'écho EMR' contenant un (premier) message de réponse MR désignant un groupe multicast (ici GM1), il est avantageux qu'elles transmettent en mode diffusion le message de réponse MR qu'il contient (encapsule) aux terminaux MS qui sont respectivement connectés à elles Ainsi, lorsque les terminaux MS reçoivent ce message de réponse MR diffusé, ils en déduisent qu'il a eté précédemment transmis par un autre terminal MS et donc qu'ils ne doivent plus répondre au dernier message d'interrogation MI relatif au groupe multicast (ici GM1) qu'il désigne et qu'ils ont precédemment reçu. On comprendra bien entendu qu'ils peuvent répondre à tout autre message d'interrogation reçu ou qu'ils vont bientôt recevoir et désignant n'importe quel autre groupe multicast GMk (ici k ≠1), tant que cela ne leur est pas interdit.

On notera que chaque station de base SBi transfère en mode diffusion vers les terminaux MS le message IP EMR" qui est encapsulé dans le message d'écho EMR reçu du serveur de service MBS SM et qui encapsule lui même le message de réponse IGMP MR, et non ledit message d'écho EMR' reçu, Pour ce faire il lui suffit donc de désencapsuler le message du tunnel GRE unicast adjoint au message IP EMR" Bien que l'adresse source IP initiale du message de réponse (ou IGMP report) MR (adresse du terminal source MS) ait été remplacée par l'adresse source IP d'une station de base BS lors de l'agrégation consécutive à la réception du premier message de réponse MR, le message IP EMR' qui est transféré vers les terminaux MS peut être également appelé message d'écho du fait qu'il contient le message de réponse (ou IGMP report) MR initial.

La mise en oeuvre du procédé décrit ci-avant peut se faire au moyen d'adaptations des stations de base SBi et du serveur de service MBS SM. De telles adaptations peuvent être de type logiciel (ou informatique (« software »)) et/ou de type matériel (ou « hardware »).

L'invention ne se limite pas aux modes de réalisation de système de contrôle, de stations de base (et analogues), de serveur de service MBS et de procédé de contrôle décrits ci-avant, seulement à titre d'exemple, mais elle englobe toutes les variantes que pourra envisager l'homme de l'art dans le cadre des revendications ci-après

## Revendications

1. Procédé de contrôle de la fourniture de contenus MBS à diffuser dans une zone MBS (ZM) d un réseau de communication, **caractérisé en ce qu'**il consiste i) à transmettre d'un serveur de service MBS (SM) de ladite zone MBS (ZM) vers des terminaux de communication (MS) connectés à des stations de base (SBi) faisant partie de cette zone MBS (ZM), un message d interrogation demandant si au moins l'un desdits terminaux (MS) est intéressé par un groupe de contenu(s) désigné par un identifiant de groupe, et ii) lorsque l'une desdites stations de base (SBi) reçoit d'un terminal (MS) un premier message de réponse signalant son intérêt pour ledit groupe, à n'adresser que ce premier message de réponse au serveur de service MBS (SM), mais pas les messages de réponse suivants issus d'autres terminaux (MS) et relatifs au même groupe, et à signaler à certaines au moins des stations de base (SBi) qu'elles ne doivent plus adresser audit serveur de service MBS (SM) de message de réponse désignant ce même groupe et/ou à certains au moins des terminaux (MS) qu'ils ne doivent plus adresser aux stations de base (SBi) auxquelles ils sont connectés de message de réponse désignant ce même groupe.

2. Procédé selon la revendication 1, **caractérisé en ce que** lorsque l'une desdites stations de base (SBi) reçoit d'un terminal (MS) un premier message de réponse signalant son intérêt pour ledit groupe, elle n'adresse que ce premier message de réponse au serveur de service MBS (SM), et elle adresse ce message de réponse aux terminaux (MS) qui sont connectés à elle pour leur signaler qu'ils ne doivent plus répondre au message d'interrogation relatif au groupe qu il désigne.

3. Procédé selon l'une des revendications 1 et 2, **caractérisé en ce que** lorsque ledit serveur de service MBS (SM) reçoit de l'une desdites stations de base (SBi) un premier message de réponse désignant ledit groupe objet dudit message d interrogation, il adresse ce message de réponse auxdites stations de base (SBi) pour leur signaler qu'elles ne doivent plus lui adresser de message de réponse désignant ledit groupe.

4. Procédé selon la revendication 3, **caractérisé en ce que** lorsque lesdites stations de base (SBi) reçoivent du serveur de service MBS (SM) ledit message de réponse désignant ledit groupe elles adressent ce message de réponse aux terminaux (MS) qui sont respectivement connectés à elles afin de leur signaler qu'ils ne doivent plus répondre au message d'interrogation désignant ledit groupe.

5. Système de contrôle de la fourniture de contenus MBS à diffuser dans une zone MBS (ZM) d'un réseau de communication, **caractérisé en ce qu'**il comprend i) des stations de base (SBi) faisant partie de ladite zone MBS (ZM), ii) des terminaux de communication (MS) propres à se connecter auxdites stations de base (SBi), et iii) un serveur de service MBS (SM) associé à ladite zone MBS (ZM) et agencé pour transmettre auxdits terminaux de communication (MS) des messages d'interrogation demandant si au moins l'un d'entre eux est intéressé par un groupe de contenu(s) désigné par un identifiant de groupe, **en ce que** chaque station de base (SBi) est agencée, lorsqu'elle reçoit d'un terminal (MS) un premier message de réponse signalant son intérêt pour un groupe désigné dans un message d'interrogation précédemment reçu, pour n'adresser que ce premier message de réponse au serveur de service MBS (SM), mais pas les messages de réponse suivants issus d'autres terminaux (MS) et relatifs au même groupe, et **en ce que** ledit serveur de service MBS (SM) est agencé, lorsqu'il reçoit un premier message de réponse désignant un groupe, pour signaler à certaines au moins des stations de base (SBi) qu'elles ne doivent plus lui adresser de message de réponse désignant ce groupe.

6. Système selon la revendication 5. **caractérisé en ce que** chaque station de base (SBi) est agencée, lorsqu'elle reçoit d'un terminal (MS) un premier message de réponse signalant son intérêt pour un groupe désigné dans un message d'interrogation précédemment reçu, pour signaler aux terminaux (MS) qui sont connectés à elle qu'ils ne doivent plus répondre au message d'interrogation relatif audit groupe désigné.

7. Système selon la revendication 6, **caractérisé en ce que** chaque station de base (SBi) est agencée, lorsqu'elle reçoit d'un terminal (MS) un premier message de réponse signalant son intérêt pour un groupe désigné dans un message d'interrogation précédemment reçu, pour n'adresser que ce premier message de réponse au serveur de service MBS (SM), et pour adresser ce premier message de réponse aux terminaux (MS) qui sont connectés à elle pour leur signaler qu ils ne doivent plus répondre au message d'interrogation relatif au groupe qu'il désigne.

8. Système selon l'une des revendications 5 a 7, **caractérisé en ce que** ledit serveur de service MBS (SM) est agencé, lorsqu'il reçoit de l'une desdites stations de base (SBi) un premier message de réponse désignant ledit groupe objet dudit message d'interrogation, pour adresser ce message de réponse auxdites stations de base (SBi) pour leur signaler qu'elles ne doivent plus lui adresser de message de réponse désignant ledit groupe

9. Système selon la revendication 8, **caractérisé en ce que** chaque station de base (SBi) est agencée, lorsqu elle reçoit dudit serveur de service MBS (SM) ledit message de réponse désignant un groupe, pour adresser ce message de réponse aux terminaux (MS) qui sont connectés à elle afin de leur signaler qu'ils ne doivent plus répondre au message d'interrogation désignant ledit groupe

10. Station de base (SBi) pour un réseau de communication, **caractérisée en ce qu'**elle est propre à faire partie d'un système de contrôle selon l'une des revendications 5 à 9.

11. Serveur de service MBS (SM) pour un réseau de communication, **caractérisé en ce qu'**il est propre à faire partie d'un système de contrôle selon l'une des revendications 5 à 9.
